# FASCICULE DE BREVET EUROPEEN

(11) **EP 0 707 208 B1**
(45) Date de publication et mention de la délivrance du brevet: **29.03.2000**
(21) Numéro de dépôt: 95402268.7
(22) Date de dépôt: 11.10.1995
(51) Int. Cl.: G01N 27/20

(54) **Dispositif et procédé de mesure simultanée de l'étendue et de la température d'une fissure à la surface d'un corps solide électriquement conducteur**
Verfahren und Vorrichtung zum gleichzeitigen Messen des Ausbreitungsgrades und der Temperatur eines Risses in der Oberfläche eines leitfähigen Festkörpers
Method and apparatus for simultaneously determining the crack opening extent and its temperature on the surface of a solid electrically conducting body

(30) Priorité: 12.10.1994 FR 9412146
(43) Date de publication de la demande: 17.04.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Aubert, Jean-Pierre, F-94220 Charenton (FR)

(56) Documents cités:
- WO-A-90/01159
- FR-A- 2 400 706
- US-A- 4 924 708
- PATENT ABSTRACTS OF JAPAN vol. 017 no. 553 (P-1625) ,5 Octobre 1993 & JP-A-05 157721 (HITACHI LTD) 25 Juin 1993,
- PATENT ABSTRACTS OF JAPAN vol. 008 no. 045 (P-257) ,28 Février 1984 & JP-A-58 196450 (HITACHI SEISAKUSHO KK) 15 Novembre 1983,
- PATENT ABSTRACTS OF JAPAN vol. 018 no. 078 (P-1689) ,8 Février 1994 & JP-A-05 288706 (SUMITOMO METAL IND LTD) 2 Novembre 1993,
- DATABASE WPI Section EI, Week 8932 Derwent Publications Ltd., London, GB; Class S02, AN 89-233329 & SU-A-1 456 771 ( POICHENKO A YA) , 7 Février 1989

## Description

L'invention concerne un dispositif et un procédé de mesure simultanée de l'étendue et de la température d'une fissure ouverte à la surface d'un corps solide électriquement conducteur. Elle s'applique notamment à la détermination de l'influence des conditions de température sur la propagation des fissures, par exemple lors de l'étude des caractéristiques de la résistance à la fissuration de nouveaux matériaux de construction pour pièces et ensembles d'importance critique dans les constructions mécaniques, ainsi que des pièces et structures elles-mêmes, telles que les structures de cellules d'avions, ou les pièces de moteurs d'avions.

L'étude de la progression de fissures sous des conditions de sollicitations variées telles que des variations de température au cours d'un cyclage mécanique est un problème très important car il permet de concevoir des constructions optimales qui assurent une tolérance au dommage et un degré de sécurité prédéterminés.

Il existe différentes méthodes et dispositifs pour déterminer les paramètres des fissures dans les constructions et les échantillons d'essai. Notamment il est connu de la demande de brevet française publiée sous le n°2 400 706, de déterminer l'étendue d'une fissure ouverte à la surface d'un corps solide constitué en un matériau électriquement conducteur par étude de sa résistance électrique, cette étude est réalisée en appliquant dans ce corps, un courant électrique d'intensité constante selon une direction qui, de préférence, est la plus voisine possible de la perpendiculaire à la fissure, et en mesurant la différence de potentiel entre deux points de mesure situés de part et d'autre de la fissure ouverte. Au voisinage de la fissure, les lignes de courant sont déviées et contournent la fissure, l'augmentation de trajet de ces lignes de courant étant fonction de l'étendue (profondeur et/ou longueur) de la fissure. La différence de potentiel mesurée entre les deux points de mesure est donc représentative de la résistance électrique du corps entre les deux points de mesure. La différence de potentiel peut être mesurée par l'intermédiaire de deux fils électriques placés aux deux points de mesure et connectés à un appareil de mesure tel que par exemple un suiveur de fissure.

Dans le cas de l'étude de la propagation des fissures dans un environnement soumis à des variations de températures, il est également nécessaire de pouvoir déterminer de façon précise la température de l'éprouvette à la pointe de la fissure. Des mesures de température peuvent être effectuées de façon classique au moyen d'un thermocouple plaqué sur la surface de l'éprouvette. Cependant cette disposition du thermocouple ne permet pas d'effectuer une mesure de la température à l'endroit même de la fissure et ne permet pas d'obtenir une fiabilité et une reproductibilité de mesure suffisantes.

L'invention a pour but de résoudre ce problème et de réaliser un procédé et un dispositif de mesure simultanée de l'étendue et de la température d'une fissure ouverte à la surface d'un corps solide électriquement conducteur à l'endroit même de cette fissure et sans utiliser de thermocouple externe. Pour cela, l'invention consiste à connecter, en deux points de mesure situés de part et d'autre de la fissure, deux fils électriques formant un couple thermoélectrique, à appliquer périodiquement un courant électrique continu d'intensité constante dans le corps selon une direction de préférence perpendiculaire à la fissure, à mesurer la différence de potentiel entre ces deux points de mesure respectivement pendant deux phases successives d'application et d'interruption du courant électrique, à traiter les valeurs de différence de potentiel mesurées pour en déduire simultanément l'étendue de la fissure et la température à la pointe de la fissure.

Selon l'invention, le dispositif de mesure simultanée de l'étendue et de la température d'une fissure à la surface d'un corps solide électriquement conducteur, ce corps étant parcouru périodiquement par un courant électrique continu d'intensité constante selon une direction qui est la plus voisine possible de la perpendiculaire à la fissure, est caractérisé en ce qu'il comporte deux fils électriques formant un couple thermoélectrique, ces deux fils étant connectés en deux points de mesure situés de part et d'autre de la fissure et reliés d'une part à deux bornes d'entrée d'un dispositif de mesure de l'étendue de la fissure et d'autre part à deux bornes d'entrée d'un dispositif de mesure de la température au niveau de la fissure.

L'invention concerne également un procédé de mesure simultanée de l'étendue et de la température d'une fissure à la surface d'un corps solide électriquement conducteur, ce procédé consistant à faire circuler périodiquement un courant électrique continu d'intensité constante dans le corps selon une direction qui est la plus voisine possible de la perpendiculaire à la fissure, caractérisé en ce qu'il consiste:
- à connecter en deux points de mesure situés de part et d'autre de la fissure, deux fils électriques formant un couple thermoélectrique,
- à mesurer par l'intermédiaire des deux fils électriques la différence de potentiel entre les deux points de mesure pendant une phase d'interruption du courant électrique continu, cette différence de potentiel étant représentative de la température du corps au niveau de la fissure,
- à mesurer par l'intermédiaire des deux fils électriques la différence de potentiel entre les deux points de mesure pendant une phase d'application du courant électrique continu, cette différence de potentiel comportant une composante représentative de l'étendue de la fissure et une composante représentative de la température du corps au niveau de la fissure.
- à traiter les valeurs de différence de potentiel mesurées pour en déduire simultanément l'étendue de la fissure et la température du corps au niveau de la fissure.

D'autres particularités et avantages de l'invention apparaitront clairement dans la suite de la description donnée à titre d'exemple non limitatif et faite en regard des figures annexées qui représentent :
- la figure 1, un schéma synoptique du dispositif de mesure simultanée de l'étendue et de la température d'une fissure, selon l'invention ;
- la figure 2, un exemple de disposition des fils électriques permettant d'effectuer les mesures simultanées de l'étendue de la fissure et de la température au niveau de la fissure ;
- les figures 3a et 3b, deux exemples de chronogrammes relatifs respectivement à un exemple de courant électrique appliqué à un corps solide perpendiculairement à la fissure, et à un exemple correspondant de différence de potentiel entre deux points situés de part et d'autre de la fissure.

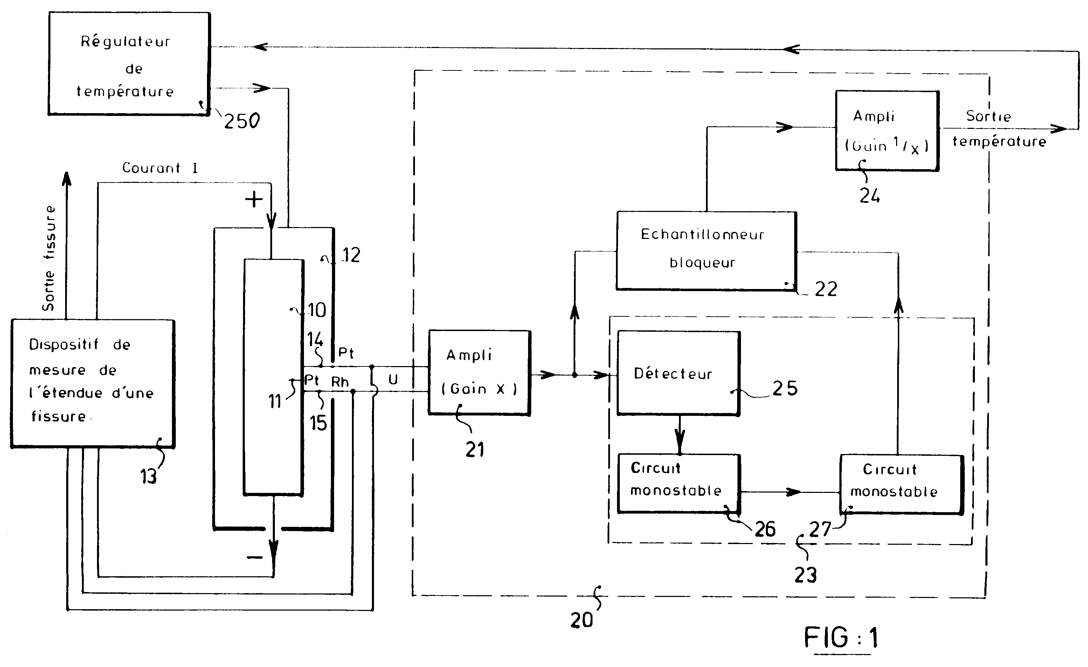

La figure 1 représente un schéma synoptique du dispositif de mesure simultanée de l'étendue et de la température d'une fissure ouverte à la surface d'un corps solide électriquement conducteur, selon l'invention.

Un corps solide 10 comportant une fissure 11 est disposé à l'intérieur d'un four 12.

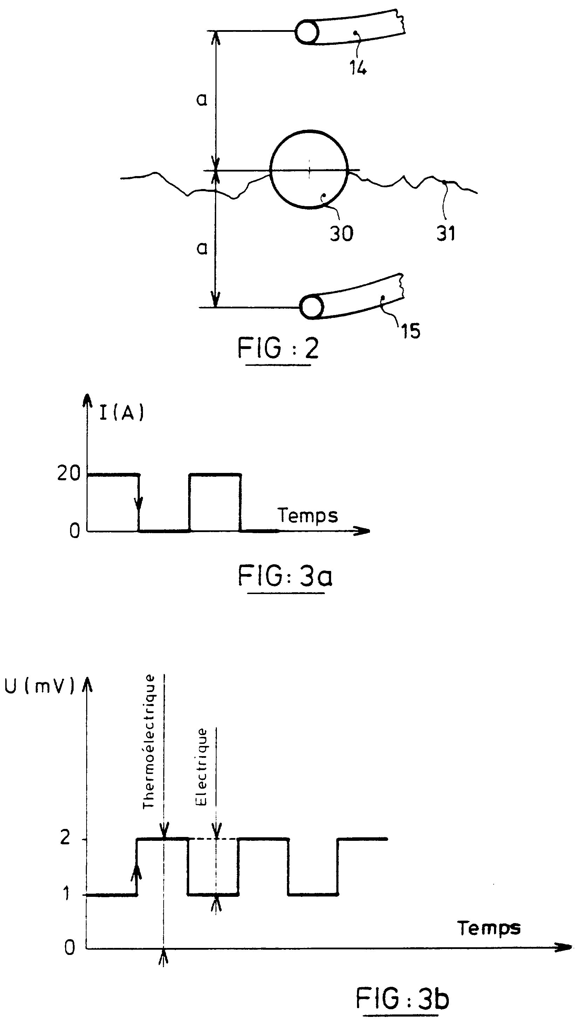

Un courant électrique I continu et d'intensité constante délivré par un dispositif de mesure de l'étendue d'une fissure tel que par exemple un suiveur de fissure 13 est appliqué périodiquement au corps solide 10 suivant une direction approximativement perpendiculaire à la fissure 11. Deux fils électriques 14, 15 formant un couple thermoélectrique sont connectés en deux points de mesure situés de part et d'autre de la fissure 11. La figure 2 montre un exemple de disposition des deux fils électriques 14, 15. Selon cet exemple, les deux fils électriques 14, 15 sont soudés de part et d'autre et à égale distance "a" d'un défaut 30 initiateur de fissure 31, ce défaut 30 étant un trou percé par électroérosion et traversant la paroi du corps solide. Les deux fils 14, 15 sont par exemple constitués respectivement de platine et de platine-Rhodié 10%.

Les deux fils électriques 14, 15 sont respectivement reliés à deux entrées du suiveur de fissure 13 destiné à délivrer en sortie un signal électrique représentatif de l'étendue de la fissure. Les deux fils électriques 14, 15 sont également reliés à deux entrées d'un dispositif 20 de mesure de la température à la pointe de la fissure.

La sortie du dispositif 20 de mesure de la température de la fissure est reliée à une entrée d'un régulateur 250 de température du four 12.

Le dispositif 20 de mesure de la température comporte un amplificateur 21 de gain X à grande impédance d'entrée ayant une sortie connectée d'une part, à une entrée d'un échantillonneur bloqueur 22 destiné à prélever la différence de potentiel U entre les deux points de mesure et d'autre part, à des moyens de commande 23 de l'échantillonneur bloqueur 22. La sortie de l'échantillonneur bloqueur 22 est connectée à une entrée d'un amplificateur 24 de gain 1/X destiné à délivrer en sortie un signal électrique représentatif de la température à la pointe de la fissure au droit des deux points de mesure.

Le fonctionnement du dispositif représenté sur la figure 1 est le suivant.

Lorsque le corps solide 10 est parcouru par le courant continu I, la différence de potentiel U entre les deux points de mesure comporte une composante représentative de la résistance électrique du corps 10 entre ces deux points de mesure et une composante représentative de l'effet thermoélectrique entre ces deux points de mesure. En l'absence de passage du courant continu I dans le corps solide 10, la différence de potentiel U entre les deux points de mesure est uniquement due à l'effet thermoélectrique. Les mesures de l'étendue et de la température de la fissure sont alors effectuées simultanément de la façon décrite ci-après.

Pour obtenir une mesure de l'étendue de la fissure, le suiveur de fissure 13 mesure la différence de potentiel entre les deux points de mesure à deux instants différents choisis respectivement pendant deux phases successives d'application et d'interruption du courant continu I et effectue la différence entre ces deux mesures. Le signal électrique ainsi obtenu est représentatif de l'étendue de la fissure.

Pour obtenir une mesure de la température à la pointe de la fissure, le dispositif 20 de mesure de la température mesure la différence de potentiel entre les deux points de mesure à un instant choisi pendant une phase d'interruption du courant continu I. A cet effet, les moyens de commande 23 de l'échantillonneur-bloqueur 22 comportent, en série, un détecteur 25 destiné à détecter le début de la phase d'interruption du courant continu I ; un premier circuit monostable 26 destiné à retarder le déclenchement de la mesure de la différence de potentiel entre les deux points de mesure pendant une durée prédéterminée, par exemple pendant 2,5 ms, afin d'éviter que cette mesure ne soit effectuée trop tôt, au cours de la phase transitoire d'annulation du courant I dans le corps 10 ; un deuxième circuit monostable 27 commandé par le premier circuit monostable 26 et destiné à déclencher et arrêter l'échantillonneur-bloqueur 22. Le prélèvement de la mesure de la différence de potentiel U entre les deux points de mesure est effectué pendant une durée imposée par le deuxième circuit monostable 27. Cette durée est choisie égale à la période du signal parasite principal auquel est sensible le dispositif de mesure, de façon à éliminer l'influence de ce parasite.

En général, la perturbation principale est due au champ électromagnétique alternatif rayonné par le secteur, avec une fréquence de 50 Hz en Europe. Dans ce cas, la durée du prélèvement de la mesure est choisie égale à 1/50ème de seconde. Après amplification dans l'amplificateur 24, le signal électrique obtenu en sortie de l'échantillonneur-bloqueur, représentatif de la température à la pointe de la fissure à l'instant de mesure, est utilisé par le régulateur 25 de température pour réguler la température du four 12.

L'effet thermoélectrique pouvant être supérieur à l'effet électrique et le suiveur de fissure ayant une tension d'entrée limitée, les deux fils électriques 14, 15 formant un couple thermoélectrique sont de préférence soudés aux deux points de mesure de manière à ce que la différence de potentiel représentative de l'effet thermoélectrique soit en opposition par rapport à la différence de potentiel représentative de l'effet électrique induit par la circulation du courant continu I dans le corps solide 10. Ainsi, pendant la phase d'application du courant continu I, la différence de potentiel U entre les deux points de mesure est alors représentative de la différence entre la composante due à l'effet électrique et la composante due à l'effet thermoélectrique, et présente un ordre de grandeur compatible avec le suiveur de fissure.

Les figures 3a et 3b représentent deux exemples de chronogrammes relatifs respectivement à un exemple de courant électrique continu I appliqué au corps solide 10, et à un exemple de la différence de potentiel U correspondante. Le chronogramme 3b correspond au cas où les deux fils électriques 14, 15 sont soudés de manière à ce que les différences de potentiel représentatives de l'effet électrique et de l'effet thermoélectrique soient en opposition, et au cas où l'effet thermoélectrique est plus important que l'effet électrique.

La figure 3b montre que dans ces conditions la valeur de la différence de potentiel U entre les deux points de mesure est plus faible pendant la phase d'application du courant continu I au corps solide 10 que pendant la phase d'interruption de ce courant I. Le début de la phase d'interruption du courant continu I peut alors être déterminé par le détecteur 25 en détectant le front ascendant de la différence de potentiel U.

L'invention n'est pas limitée à l'exemple de réalisation précisément décrit ; notamment les fils électriques 14, 15 peuvent être constitués par d'autres matériaux que le platine et le platine-Rhodié 10% dès l'instant que ces matériaux constituent un couple thermoélectrique.

## Revendications

1. Dispositif de mesure simultanée de l'étendue et de la température d'une fissure à la surface d'un corps solide électriquement conducteur, ce corps étant parcouru périodiquement par un courant électrique continu d'intensité constante selon une direction qui est la plus voisine possible de la perpendiculaire à la fissure, caractérisé en ce qu'il comporte deux fils électriques (14, 15) formant un couple thermoélectrique, ces deux fils étant connectés en deux points de mesure situés de part et d'autre de la fissure (11) et reliés d'une part à deux bornes d'entrée d'un dispositif de mesure (13) de l'étendue de la fissure (11) et d'autre part à deux bornes d'entrée d'un dispositif (20) de mesure de la température au niveau de la fissure.

2. Dispositif de mesure selon la revendication 1, caractérisé en ce que le dispositif (20) de mesure de la température comporte un échantillonneur-bloqueur (22) destiné à prélever la différence de potentiel entre les deux points de mesure pendant une phase d'interruption du courant continu dans le corps (10) et des moyens de commande (23) de l'échantillonneur-bloqueur (22).

3. Dispositif de mesure selon la revendication 2, caractérisé en ce que les moyens de commande (23) comportent en série, un détecteur (25) destiné à détecter le début de la phase d'interruption du courant continu, un premier circuit monostable (26) destiné à retarder le déclenchement de la mesure de la différence de potentiel pendant une durée prédéterminée, un deuxième circuit monostable (27) commandé par le premier circuit monostable (26) et destiné à déclencher et arrêter l'échantillonneur-bloqueur (22).

4. Dispositif selon la revendication 3, caractérisé en ce que les deux fils électriques (14, 15) formant un couple thermoélectrique sont constitués respectivement de platine et de platine-Rhodié 10%.

5. Dispositif selon l'une quelconque des revendications précédentes, caractérisé en ce que les deux fils (14, 15) sont soudés aux deux points de mesure de manière à ce que la différence de potentiel représentative d'un effet thermoélectrique induit par la température soit en opposition par rapport à un effet électrique induit par la circulation du courant continu dans le corps (10).

6. Procédé de mesure simultanée de l'étendue et de la température d'une fissure à la surface d'un corps solide électriquement conducteur, ce procédé consistant à faire circuler périodiquement un courant électrique continu d'intensité constante dans le corps selon une direction qui est la plus voisine possible de la perpendiculaire à la fissure, caractérisé en ce qu'il consiste :
- à connecter en deux points de mesure situés de part et d'autre de la fissure (11), deux fils électriques (14, 15) formant un couple thermoélectrique,
- à mesurer par l'intermédiaire des deux fils électriques (14, 15) la différence de potentiel entre les deux points de mesure pendant une phase d'interruption du courant électrique continu, cette différence de potentiel étant représentative de la température du corps (10) au niveau de la fissure,
- à mesurer par l'intermédiaire des deux fils électriques (14, 15) la différence de potentiel entre les deux points de mesure pendant une phase d'application du courant électrique continu, cette différence de potentiel comportant une composante représentative de l'étendue de la fissure et une composante représentative de la température du corps (10) au niveau de la fissure (11),
- à traiter les valeurs de différence de potentiel mesurées pour en déduire simultanément l'étendue de la fissure et la température du corps (10) au niveau de la fissure (11).

7. Procédé de mesure selon la revendication 6, caractérisé en ce que le prélèvement de la mesure de la différence de potentiel pendant la phase d'interruption du courant continu est effectué pendant une durée choisie égale à la période d'un signal parasite.

## Patentansprüche

1. Vorrichtung zum gleichzeitigen Messen der Ausdehnung und der Temperatur eines Risses an der Oberfläche eines elektrisch leitfähigen festen Körpers, wobei dieser Körper in einer Richtung, die der Senkrechten zu dem Riß so nahe wie möglich liegt, von einem elektrischen Gleichstrom konstanter Stärke durchflossen wird,
**dadurch gekennzeichnet,**
daß sie zwei elektrische Leiterdrähte (14,15) aufweist, die ein Thermoelement bilden, wobei diese beiden Leiterdrähte an zwei zu beiden Seiten des Risses (11) liegende Meßpunkte angeschlossen sind und auf der einen Seite mit zwei Eingangsanschlüssen einer Vorrichtung (13) zum Messen der Ausdehnung des Risses (11) und auf der anderen Seite mit zwei Eingangsanschlüssen einer Vorrichtung (20) zum Messen der Temperatur im Bereich des Risses verbunden sind.

2. Meßvorrichtung nach Anspruch 1, dadurch gekennzeichnet, daß die Vorrichtung (20) zum Messen der Temperatur eine Abtast- und Halteeinrichtung (22) zum Abgreifen der Potentialdifferenz zwischen den beiden Meßpunkten während einer Unterbrechungsphase des Gleichstroms in dem Körper (10) sowie eine Steuereinrichtung (23) zur Steuerung der Abtast- und Halteeinrichtung (22) aufweist.

3. Meßvorrichtung nach Anspruch 2, dadurch gekennzeichnet, daß die Steuereinrichtung (23) eine Reihenschaltung aufweist, bestehend aus einem Detektor (25) zum Detektieren des Beginns der Unterbrechungsphase des Gleichstroms, einer ersten monostabilen Schaltung (26) zum Verzögern der Auslösung der Potentialdifferenzmessung um eine vorbestimmte Zeitspanne und einer von der ersten monostabilen Schaltung (26) gesteuerten zweiten monostabilen Schaltung (27) zum Auslösen und Anhalten der Abtast- und Halteeinrichtung (22).

4. Vorrichtung nach Anspruch 3, dadurch gekennzeichnet, daß die zwei ein Thermoelement bildenden elektrischen Leiterdrähte (14, 15) aus Platin bzw. aus Platin mit 10% Rhodium bestehen.

5. Vorrichtung nach einem der vorhergehenden Ansprüche, dadurch gekennzeichnet, daß die zwei Leiterdrähte (14, 15) so an den beiden Meßpunkten angelötet sind, daß die Potentialdifferenz, die für einen durch die Temperatur induzierten thermoelektrischen Effekt repräsentativ ist, dem durch das Fließen des Gleichstroms in dem Körper (10) induzierten elektrischen Effekt entgegengesetzt ist.

6. Verfahren zum gleichzeitigen Messen der Ausdehnung und der Temperatur eines Risses an der Oberfläche eines elektrisch leitfähigen festen Körpers, wobei man periodisch einen elektrischen Gleichstrom konstanter Stärke durch den Körper in einer Richtung fließen läßt, die der Senkrechten zu dem Riß so nahe wie möglich liegt,
**dadurch gekennzeichnet,** das
- an zwei Meßpunkten, die zu beiden Seiten des Risses (11) liegen, zwei elektrische Leiterdrähte (14, 15) angeschlossen werden, die ein Thermoelement bilden,
- daß mit Hilfe der zwei elektrischen Leiterdrähte (14, 15) die Potentialdifferenz zwischen den beiden Meßpunkten während einer Unterbrechungsphase des elektrischen Gleichstroms gemessen wird, wobei diese Potentialdifferenz für die Temperatur des Körpers im Bereich des Risses repräsentativ ist
- daß mit Hilfe der zwei elektrischen Leiterdrähte (14, 15) die Potentialdifferenz zwischen den beiden Meßpunkten während einer Phase gemessen wird, in der der elektrische Gleichstrom angelegt ist, wobei diese Potentialdifferenz eine Komponente aufweist, die für die Ausdehnung des Risses repräsentativ ist, und eine Komponente, die für die Temperatur des Körpers (10) im Bereich des Risses (11) repräsentativ ist,
- daß die Meßwerte der Potentialdifferenz verarbeitet werden und aus ihnen gleichzeitig die Ausdehnung des Risses und Temperatur des Körpers (10) im Bereich des Risses (11) hergeleitet werden.

7. Meßverfahren nach Anspruch 6, dadurch gekennzeichnet, daß das Abgreifen des Meßwerts der Potentialdifferenz in der Unterbrechungsphase des Gleichstroms während einer Dauer erfolgt, die gleich der Periode eines parasitären Signal gewählt ist.

## Claims

1. Device for the simultaneous measurement of the extent and the temperature of a crack at the surface of an electrically conductive solid body, a DC electric current of constant strength passing periodically through this body in a direction which is as close as possible to the perpendicular to the crack, characterized in that it includes two electrical wires (14, 15) forming a thermoelectric couple, these two wires being connected at two measurement points located on either side of the crack (11) and connected up, on the one hand, to two input terminals of a device (13) for measuring the extent of the crack (11) and, on the other hand, to two input terminals of a device (20) for measuring the temperature at the crack.

2. Measurement device according to Claim 1, characterized in that the device (20) for measuring the temperature includes a sample-and-hold circuit (22) intended to measure the potential difference between the two measurement points during a phase of interruption of the DC current through the body (10) and means (23) for controlling the sample-and-hold circuit (22).

3. Measurement device according to Claim 2, characterized in that the control means (23) include, in series, a detector (25) intended to detect the start of the phase of interruption of the DC current, a first monostable circuit (26) intended to delay the triggering of the measurement of the potential difference for a predetermined time, a second monostable circuit (27) controlled by the first monostable circuit (26) and intended to trigger and stop the sample-and-hold circuit (22).

4. Device according to Claim 3, characterized in that the two electrical wires (14, 15) forming a thermoelectric couple consist respectively of platinum and platinum-10% rhodium.

5. Device according to any one of the preceding claims, characterized in that the two wires (14, 15) are soldered at the two measurement points so that the potential difference representative of a thermoelectric effect induced by the temperature is in opposition with respect to an electric effect induced by passing the DC current through the body (10).

6. Method for the simultaneous measurement of the extent and the temperature of a crack at the surface of an electrically conductive solid body, this method consisting in periodically passing a DC electric current of constant strength through the body in a direction which is as close as possible to the perpendicular to the crack, characterized in that it consists:
- in connecting, at two measurement points located on either side of the crack (11), two electrical wires (14, 15) forming a thermoelectric couple,
- in measuring, by means of the two electrical wires (14, 15), the potential difference between the two measurement points during a phase of interruption of the DC electric current, this potential difference being representative of the temperature of the body (10) at the crack,
- in measuring, by means of the two electrical wires (14, 15), the potential difference between the two measurement points during a phase of application of the DC electric current, this potential difference including a component representative of the extent of the crack and a component representative of the temperature of the body (10) at the crack (11),
- in processing the potential difference values measured in order simultaneously to deduce therefrom the extent of the crack and the temperature of the body (10) at the crack (11).

7. Measurement method according to Claim 6, characterized in that the measurement of the potential difference during the phase of interruption of the DC current is taken over a time chosen to be equal to the period of a parasitic signal.
